Europäisches Patentamt

European Patent Office

Office européen des brevets

(11) Publication number: **0 033 577**
**B1**

# (12) EUROPEAN PATENT SPECIFICATION

(45) Date of publication of patent specification: **05.12.84**

(51) Int. Cl.³: **C 08 F 14/06,** C 08 F 2/20

(21) Application number: **81200139.4**

(22) Date of filing: **05.02.81**

(54) **Vinyl chloride polymers.**

(30) Priority: **05.02.80 NL 8000707**

(43) Date of publication of application:
**12.08.81 Bulletin 81/32**

(45) Publication of the grant of the patent:
**05.12.84 Bulletin 84/49**

(84) Designated Contracting States:
**AT BE CH DE FR GB IT LI NL SE**

(56) References cited:
**EP-A-0 002 861**
**FR-A-2 341 600**

**CHEMICAL ABSTRACTS, vol. 83, no. 16, 20-10-1975, abstract 132307d, page 28, column 1 Columbus, Ohio, US**
**CHEMICAL ABSTRACTS, vol. 87, no. 22 28-11-1977, abstract 168617b, page 15, column 1 Columbus, Ohio US**

**The file contains technical information submitted after the application was filed and not included in this specification**

(73) Proprietor: **STAMICARBON B.V.**
**Postbus 10**
**NL-6160 MC Geleen (NL)**

(72) Inventor: **Lemstra, Pieter Jan**
**Walcundusstraat 3**
**NL-6444 TX Brunssum (NL)**

(74) Representative: **Hoogstraten, Willem Cornelis Roeland et al**
**OCTROOIBUREAU DSM Postbus 9**
**NL-6160 MA Geleen (NL)**

Courier Press, Leamington Spa, England.

## Description

The invention relates to a process for the suspension polymerization of vinyl chloride, optionally with one or more copolymerizable monomers, with monomer-soluble, radical-forming initiators, and in the presence of suspending agents, to vinyl chloride polymers with at least 70% by weight of vinyl chloride units having good processing properties.

The suspension polymerization of vinyl chloride, optionally with copolymerizable monomers, is generally known and is carried out extensively on a technical scale. Liquid vinyl chloride is suspended in water and polymerized with monomer-soluble, radical-forming initiators at temperatures of between 30°C and 80°C. The polymerization takes place in the monomer droplets. Usual initators are lauroylperoxide, dialkylpercarbonates, specifically diisopropylpercarbonate, azo compounds, specifically azo-bis-isobutyronitrile, sulphonyl peroxides, specifically acetylcyclohexanesulphonylperoxide.

Suspending agents are used in order to promote and to stabilize the distribution of monomer or monomers in the aqueous phase and in order to prevent the agglomeration of polymer particles during the polymerization. Usual suspending agents are gelatine, cellulose derivatives, polyvinyl alcohols and polymeric suspending agents based on maleic acid or acrylic acid, for instance copolymers of maleic acid and vinyl acetate.

It has been found that particle size porosity and bulk density of the polymer, specifically of polyvinyl chloride, and consequently the processing properties as well, can be influenced by the choice of the suspending agents. Particularly with vinyl chloride polymers in which softeners are incorporated, a definite influence of the suspending agents used in the polymerization process is apparent. For the incorporation of plasticizers, the polymer must have sufficient porosity. Generally, it is true that so-called fish eyes, i.e. non-gelled portion, will be less frequent as the porosity increases.

Since the toxic properties of vinyl chloride have become known, the demands on the removal thereof from the polymer have increased. Vinyl chloride has been found to be easier to remove from the polymer as the porosity increases.

High porosity of the polymer often goes with a low bulk density. At a given porosity, however, the bulk density has been found to differ. As the bulk density increases, the processability particularly the throughput in extruders, improves. The purpose, therefore, is to prepare vinyl chloride polymers of which the bulk density at a certain, desired porosity is as high as possible.

On account of the influence of the suspending agents on a number of properties of the polymer, the choice thereof is particularly important. By modification of the suspending agents it is tried to ever further improve the properties of the polymers to be prepared.

It is known, for that purpose, to add to the usual primary suspending agent, which is understood to be a water-soluble suspending agent, a secondary suspending agent, which is understood to be a suspending agent not soluble in water. The results will then be far better than those obtained when only the primary suspending agent is used.

Thus from the Nederlands patent application 7714034 it is known that vinyl chloride polymers having good porosity, a large BET surface area, a narrow particle size distribution, few fish eyes in processing, and good plasticizer take-up can be prepared by suspension polymerization of vinyl chloride, optionally with copolymerizable monomers with monomer-soluble, radical-forming initiators, in the presence of primary and secondary suspension agents, by carrying out the polymerization in the presence of 0.005—0.5 parts by weight of a primary suspending agent known as such per 100 parts by weight of monomer and as secondary suspending agent 0.005—0.5 parts by weight, per 100 parts by weight of monomer, of a polyvinyl alcohol with a degree of polymerization of at least 250 and preferably at least 350, with a degree of solvolysis of 40 to 70 moles % and with a narrow distribution of the degree of solvolysis. As primary suspending agent, a polyvinyl alcohol with a degree of solvolysis of 70 to 90 moles % is preferably used.

The above-mentioned polyvinyl alcohols, characterized by among other things, a certain degree of solvolysis, and used as suspending agents, are prepared by solvolysis, and used as suspending agents, are prepared by solvolysis of polyvinyl acetate, because polyvinyl alcohol cannot be directly prepared by polymerization of vinylalcohol, which is tautomeric with acetaldehyde. In an aqueous or alcoholic environment polyvinyl acetate can be converted, with an acid or an alkali as catalyst, into polyvinyl alcohol. With hydrolysis in an aqueous environment acetic acid will be released and with alcoholysis in an alcoholic environment an acetic ester will be released. The term solvolysis comprises both conversions. The solvolysis may be effected completely or partially. A partially solvolyzed polyvinyl alcohol can be regarded as a copolymer of vinyl acetate and vinyl alcohol, but is in practice referred to as polyvinyl alcohol, with the degree of hydrolysis, or better the degree of solvolysis, being stated.

The effect of the secondary suspending agents, such as polyvinyl alcohol with a degree of solvolysis of 40 to 70 moles %, preferably 50 to 60 moles %, and a narrow distribution of the degree of solvolysis, is explained in the Netherlands patent application 7714034, from the presumption that this secondary suspending agent is forced into the boundary surface of the vinyl chloride monomer and the water, so that it very favourably influences the structure of the PVC to be formed.

Despite the very good results achieved according to the Netherlands patent application 7714034, the method described there shows a great disadvantage The polyvinyl alcohol with a degree of solvolysis of 40 to 70 moles %, more in particular 50 to 60 moles %, with a narrow distribution of the degree of solvolysis, to be used as secondary suspending agent, is expensive.

According to the invention, a result even better as that according to the Netherlands patent application 7114034 (strongly reduced number of fish eyes while the other properties of the PVC stay virtually the same) is obtained if the suspension polymerization of vinyl chloride, optionally with 30% by weight at most of one or more copolymerizable monomers, is carried out with monomer-soluble, radical-forming initiators and in the presence of preferably 0.005—0.5 parts by weight per 100 parts by weight of monomer of primary suspending agents and in the presence of 0.005—0.5 parts by weight of polyvinyl acetate per 100 parts by weight of monomer said polyvinylacetate having a degree of solvolysis of 2—14 moles %.

Polyvinyl acetate is to be understood as a polymer of vinyl acetate which is hardly solvolyzed and therefore has a degree of solvolysis of 2—14 moles %, often even of 3—12 moles %. It is surprising that such a relatively cheap polyvinyl acetate with a low degree of solvolysis, which can no longer act as a suspending agent, because the number of hydroxyl groups contained in it are too small for this purpose, has an even better effect than an expensive secondary suspending agent as described in the Netherlands patent application 7714034.

According to the invention this polyvinyl acetate may contain minor quantities of other monomers incorporated by polymerization, e.g. to 20% by weight.

Usual primary suspending agents are gelatin, polymeric suspending agents based on maleic acid or acrylic acid, for instance copolymers of maleic acid and vinyl acetate. Very suitable primary suspending agents are polyvinyl alcohols with a degree of solvolysis of 70 to 90 moles % and cellulose derivatives, specifically hydroxypropyl cellulose, methylhydroxypropyl cellulose and hydroxyethyl cellulose. Very suitable also are mixtures of the above polyvinyl alcohols and/or cellulose derivatives.

The invention is further elucidated by the following non-restrictive examples and comparative experiments.

Example 1

An enameled autoclave of 100 l is filled with 26.0 kg vinyl-chloride, 36.4 kg water, 15.6 g polyvinyl alcohol with a degree of solvolysis of 79 moles % and a degree of polymerization of 1700 and 10.4 g polyvinyl acetate with a low degree of solvolysis and a degree of polymerization of 330, the degree of solvolysis being about 5 moles %.

While being stirred, the whole is heated to 330.5 K and is kept at this temperature until the pressure in the autoclave, which was about 950 kPa, falls to about 800 kPa. The pressure is subsequently relieved and the polymerization is discontinued. The polyvinyl chloride is subsequently recovered from the suspension and is dried. Of this polyvinyl chloride the bulk density, the average particle size and the porosity are determined.

The average particle size $(\overline{d})$ is determined by the sieve analysis method described by Rosin and Rammler in Kolloid Zeitschrift *67* (1934), pages 16—26, and Chem. Ing. Tech., *24* (1942), pages 25—31.

The porosity $(\varepsilon)$ is determined by the mercury intrusion method at a pressure of 12 MPa. L. A. de Wit and J. J. F. Scholten, J. Cat. *36* (1975), pages 36—47, give a general exposition of the theory of this method and Guyer, Böhlen and Guyer, Helv. Chim. Acta *42* (1959) page 2103, describe an apparatus for the measuring of the porosity according to this method.

For the polyvinyl chloride of $\overline{d}$ of 167 $\mu$m, and an $\varepsilon$ 0.21×10⁻³ m³/kg and a bulk density of 525 kg/m³ are found.

Example 2

In a way similar to that of example 1, vinyl chloride is polymerized, except that polyvinyl acetate with a low degree of solvolysis and a degree of polymerization of 1480, the degree of solvolysis being about 5 moles %, is used.

In a way similar to that of example 1, a $\overline{d}$ of 175 $\mu$m, an $\varepsilon$ of 0.22×10⁻³ m³/kg and a bulk density of 525 kg/m³ are found for the polyvinyl chloride.

Example 3

In a way similar to that of example 1, vinyl chloride is polymerized, except that polyvinyl acetate with a low degree of solvolysis and a degree of polymerization of 3470, the degree of solvolysis being 5 moles %, is used.

In a way similar to that of example 1, a $\overline{d}$ of 171 $\mu$m, an $\varepsilon$ of 0.21×10⁻³ m³/kg and a bulk density of 536 kg/m³ are found for the polyvinyl chloride.

Example 4

In a way similar to that of example 1, vinyl chloride is polymerized, except that, instead of 10.4 g, 20.8 g of the same polyvinyl acetate with a low degree of solvolysis is used.

In a way similar to that of example 1, a $\overline{d}$ of 139 $\mu$m, an $\varepsilon$ of 0.30×10⁻³ m³/kg and a bulk density of 484 kg/m³ are found for the polyvinyl chloride.

Example 5

In a way similar to that of example 2, vinyl chloride is polymerized, except that, instead of 10.4 g, 20.8 g of the same polyvinyl acetate with a low degree of solvolysis is used.

In a way similar to that of example 1, a $\bar{d}$ of 150 $\mu$m, and $\varepsilon$ of 0.30×10⁻³ m³/kg and a bulk density of 480 kg/m³ are found for the polyvinyl chloride.

## Example 6

In a way similar to that of example 2, vinyl chloride is polymerized, except that, instead of 10.4 g, 20.8 g of the same polyvinyl acetate with a low degree of solvolysis is used.

In a way similar to that of example 1, a $\bar{d}$ of 144 $\mu$m, an $\varepsilon$ of 0.25×10⁻³ m³/kg and a bulk density of 521 kg/m³ are found for the polyvinyl chloride.

## Example 7

In a way similar to that of example 1, vinyl chloride is polymerized, except that, instead of polyvinyl alcohol, hydroxypropyl cellulose and, instead of 10.8 g, 15.6 g of the same polyvinyl acetate with a low degree of solvolysis is used.

In a way similar to that of example 1, a $\bar{d}$ of 160 $\mu$m, an $\varepsilon$ of 0.25×10⁻³ m³/kg and a bulk density of 517 kg/m³ are found for the polyvinyl chloride.

## Comparative experiment 1

In a way similar to that of example 1, vinyl chloride is polymerized, except that no polyvinyl acetate with a low degree of solvolysis is added.

In a way similar to that of example 1, a $\bar{d}$ of 240 $\mu$m, an $\varepsilon$ of 0.17×10⁻³ m³/kg and a bulk density of 535 kg/m³ are found for the polyvinyl chloride.

## Comparative experiment 2

In a way similar to that of example 1, vinyl chloride is polymerized, except that no polyvinyl acetate with a low degree of solvolysis is added, but, instead, 20.8 g of a secondary suspending agent, viz. a polyvinyl alcohol with a degree of solvolysis of 55 moles % and a degree of polymerization of 580 and with a narrow distribution of the degree of solvolysis, i.e. more than 80% has a degree of solvolysis of between 45 and 65 moles % (which does behave as a secondary suspending agent).

In a way similar to that of example 1, a $\bar{d}$ of 155 $\mu$m, and $\varepsilon$ of 0.29×10⁻³ m³/kg and a bulk density of 490 kg/m³ are found for the polyvinyl chloride.

## Comparative experiment 3

In a way similar to that of comparative experiment 2, vinyl chloride is polymerized, except that, as secondary suspending agent, an otherwise identical polyvinyl alcohol with a degree of polymerization of 1450 is used.

In a way similar to that of example 1, a $\bar{d}$ of 135 $\mu$m and an $\varepsilon$ of 0.33×10⁻³ m³/kg and a bulk density of 480 kg/m³ are found for the polyvinyl chloride.

The above examples show that the effect of the degree of polymerization of the polyvinyl acetate with a low degree of solvolysis on the product properties of the polyvinyl chloride is negligible. For practical reasons, however, preference is given to the use of polyvinyl acetate with a low degree of solvolysis and a degree of polymerization of between 100 and 10000.

Furthermore a number of test is carried in the course of which the manner of fish eyes is determined by gelating a composition of 100 parts by weight of PVC and 50 parts by weight of dioctyl phtalate on a roller at 150°C, mixing it for another 7 minutes after the gelation and processing it into a 0.1 mm film counting the number of dots per 100 cm². From these tests it appears that PVC prepared according to the invention has an average number of fish eyes of about 2 and PVC prepared according to the Netherlands patent application 7714034 an average number of fish eyes of about 5.

## Claims

1. A process for the preparation of vinyl chloride polymers by suspension polymerization of vinyl chloride, optionally with 30% by weight of most of one or more copolymerizable monomers, with monomer-soluble, radical-forming initiators and in the presence of suspending agents, this process being characterized in that the suspension polymerization is carried out in the presence of a primary suspending agent and 0.005—0.5 parts by weight of polyvinyl acetate per 100 parts by weight of monomer, said polyvinyl acetate having a degree of solvolysis of 2—14 moles %.

2. A process according to claim 1 characterized in that the polyvinyl acetate has a degree of polymerization of between 100 and 10000.

3. A process according to claim 2, characterized in that the polyvinyl acetate has a degree of solvolysis of 3—12 moles %.

4. A process according to any one of claims 1—3, characterized in that 0.005—0.5 part by weight of the primary suspending agent is used per 100 parts by weight of monomer.

5. A process according to claim 4, characterized in that, as primary suspending agent, polyvinyl alcohol with a degree of solvolysis of between 70 and 90 moles %, one or more cellulose derivatives or mixtures thereof are used.

6. A process according to claim 5, characterized in that, as cellulose derivative, hydroxypropyl cellulose, methylhydroxypropyl cellulose and/or hydroxyethyl cellulose are used.

## Patentansprüche

1. Verfahren zur Herstellung von Vinylchloridpolymeren durch Suspensionpolymerisation von Vinylchlorid, gegebenenfalls mit höchstens 30 Gew.-% an einem oder mehreren copolymerisierbaren Monomeren, mit monomer-löslichen radikal-bildenden Initiatoren und in Gegenward von Suspendiermitteln, dadurch gekennzeichnet, daß die Suspensionspolymerisation in Gegenwart eines primaren Suspendiermittels und von 0,05—0,5 Gew.- Teilen Polyvinylacetat je 100 Gew.-Teilen Monomer durchgeführt wird, welches Polyvinylacetat einen Solvolysegrad von 2—14 Mol-% hat.

2. Verfahren nach Anspruch 1, dadurch gekennzeichnet, daß das Polyvinylacetat einen Polymerisationsgrad zwischen 100 und 10.000 hat.

3. Verfahren nach Anspruch 2, dadurch gekennzeichnet, daß das Polyvinylacetate einen Solvolysegrad von 3—12 Mol-% hat.

4. Verfahren nach einem der Ansprüche 1 bis 3, dadurch gekennzeichnet, daß 0,005—0,5 Gew.-Teile primäres Suspendiermittel je 100 Gew.-Teilen Monomer eingesetzt werden.

5. Verfahren nach Anspruch 4, dadurch gekennzeichnet, daß als primäres Suspendiermittel Polyvinylalkohol mit einem Solvolysegrad zwischen 70 und 90 Mol-%, ein oder mehrere Cellulosederivate oder Gemische davon eingesetzt werden.

6. Verfahren nach Anspruch 5 dadurch gekennzeichnet, daß als Cellulosederivat Hydroxypropylcellulose, Methylhydroxypropylcellulose und/oder Hydroxyäthylcellulose eingesetzt werden.

## Revendications

1. Procédé de préparation de polymères de chlorure de vinyle par polymérisation en suspension du chlorure de vinyle, facultativement avec 30% en poids au maximum d'un ou plusieurs monomères co-polymérisables, avec des initiateurs radicalaires solubles dans les monomères et en présence d'agents de mise en suspension, ce procédé étant caractérisé en ce qu'on effectue la polymérisation en suspension en présence d'une agent primaire de mise en suspension et de 0,005 à 0,5 partie en poids d'acetate de polyvinyle par 100 parties en poids du monomère, ledit acétate de polyvinyle ayant un degré de solvolyse de 2 à 14 moles %.

2. Procédé selon la revendication 1, caractérisé en ce que l'acétate de polyvinyle présente un degré de polymérisation de 100 à 10 000.

3. Procédé selon la revendication 2, caractérisé en ce que l'acétate de polyvinyle présente un degré de solvolyse de 3 à 12 moles %.

4. Procédé selon l'une quelconque des revendications 1 à 3, caractérisé en ce qu'on utilise 0,005 à 0,5 partie en poids de l'agent primaire de mise en suspension par 100 parties en poids du monomère.

5. Procédé selon la revendication 4, caractérisé en ce qu'à titre d'agent primaire de mise en suspension, on utilise un alcool polyvinylique ayant un degré de solvolyse de 70 à 90 moles %, un ou plusieurs dérivés cellulosiques ou des mélanges de ceux-ci.

6. Procédé selon la revendication 5, caractérisé en ce que comme dérivé cellulosique on utilise l'hydroxypropylcellulose, la méthylhydroxypropylcellulose et/ou l'hydroxyéthylcellulose.